(19) Europäisches Patentamt European Patent Office Office européen des brevets

(11) **EP 3 963 012 B1**

(12) **EUROPEAN PATENT SPECIFICATION**

(45) Date of publication and mention
of the grant of the patent:
**07.06.2023 Bulletin 2023/23**

(21) Application number: **20722280.3**

(22) Date of filing: **24.04.2020**

(51) International Patent Classification (IPC):
**C09D 5/02** (2006.01)   **C09D 175/06** (2006.01)
**C09D 133/08** (2006.01)   **C09D 7/62** (2018.01)
**C09D 7/61** (2018.01)   **C09D 5/18** (2006.01)
**C09D 133/10** (2006.01)   **C08L 75/06** (2006.01)

(52) Cooperative Patent Classification (CPC):
(C-Sets available)
**C09D 175/06; C08L 75/06; C09D 5/024;**
**C09D 5/18; C09D 7/61; C09D 7/62; C09D 133/08;**
**C09D 133/10;** C08K 5/0066; C08K 9/10;
C08K 2003/2227; C08K 2003/323   (Cont.)

(86) International application number:
**PCT/EP2020/061416**

(87) International publication number:
**WO 2020/221660 (05.11.2020 Gazette 2020/45)**

(54) **HALOGEN-FREE, NON-INTUMESCENT, FIRE RETARDANT COATING COMPOSITION**

HALOGENFREIE, NICHTINTUMESZENTE, FEUERHEMMENDE
BESCHICHTUNGSZUSAMMENSETZUNG

COMPOSITION DE REVÊTEMENT SANS HALOGÈNE, NON INTUMESCENT ET IGNIFUGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.04.2019 US 201962840088 P
20.05.2019 EP 19175402**

(43) Date of publication of application:
**09.03.2022 Bulletin 2022/10**

(73) Proprietor: **Akzo Nobel Coatings International B.V.
1077 WW Amsterdam (NL)**

(72) Inventors:
• **RHOADES, Toolika Agrawal
Troy, Michigan 48085 (US)**
• **EOVALDI, Daniel
Macomb, Michigan 48044 (US)**
• **ZAGER, Dmitry
Bloomfield, Michigan 48322 (US)**

(74) Representative: **Akzo Nobel IP Department
Christian Neefestraat 2
1077 WW Amsterdam (NL)**

(56) References cited:
**WO-A1-2004/050980   CN-A- 109 423 149
US-A- 6 150 448   US-A1- 2016 333 193
US-A1- 2017 260 366   US-A1- 2019 031 892**

• **MIRMOHSENI ABDOLREZA ET AL: "Waterborne
acrylic-polyaniline nanocomposite as antistatic
coating: preparation and characterization",
IRANIAN POLYMER JOURNAL, IRAN POLYMER
AND PETROCHEMICAL INSTITUTE, IR, vol. 25,
no. 12, 25 October 2016 (2016-10-25), pages
991-998, XP036107331, ISSN: 1026-1265, DOI:
10.1007/S13726-016-0486-9 [retrieved on
2016-10-25]**

• Anonymous: "GLASS TRANSITION TEMPERATURES", Polymer Properties Database, 1 January 2015 (2015-01-01), XP055626574, Retrieved from the Internet: URL:http://polymerdatabase.com/polymer%20physics/Polymer%20Tg.html [retrieved on 2019-09-26]
• DIMIC-MISIC K ET AL: "Comparing the rheological properties of novel nanofibrillar cellulose-formulated pigment coating colours with those using traditional thickener", NORDIC PULP AND PAPER RESEARCH JOURNAL, vol. 29, no. 2, 1 January 2014 (2014-01-01), pages 253-270, XP055332045,
• Anonymous: "TOAGOSEI Catalogue of Acrylic Products", , 1 November 2016 (2016-11-01), XP055704859, Retrieved from the Internet: URL:http://www.toagosei.co.jp/products/acryl/catalog/pdf/index_pdf_01.pdf [retrieved on 2020-06-15]
• QIAN J Y ET AL: "The role of dispersed phase morphology on toughening of epoxies", POLYMER, ELSEVIER SCIENCE PUBLISHERS B.V, GB, vol. 38, no. 1, 1 January 1997 (1997-01-01), pages 21-30, XP004014930, ISSN: 0032-3861, DOI: 10.1016/S0032-3861(96)00492-2

(52) Cooperative Patent Classification (CPC): (Cont.)

C-Sets
C08L 75/06, C08K 5/0066, C08L 33/10;
C09D 133/08, C08L 75/06, C08K 3/22;
C09D 133/08, C08L 75/06, C08K 3/32

**Description**

Field of the invention

The present invention relates to a fire retardant coating composition useful in the area of cabin coatings.

Background

Fire retardant coatings have been developed to control fire by various means, including raising the combustion temperature, reducing the rate of burning, reducing flame propagation, and reducing smoke generation. For the commercial aircraft industry, aircraft interior components are typically sandwich structures comprising a core structural panel sandwiched between outer skins. Such interior components, like floors, sidewalls, panel coverings, window surrounds, partitions, bulkheads, ceilings, and stowage compartments must withstand fire and emit minimum quantities of smoke and/or other toxic fumes during combustion.

Fire resistance standards in the United States are established by the Federal Aviation Administration. For aircraft interior components, Regulation FAR 25.853 includes flammability requirements for materials used in many aircraft operated in the United States. In particular, FAR 25.853 requires a flame time of the material not to exceed fifteen seconds, a burn length, which is not to exceed six inches, and a drip flame which is not to exceed three seconds.

Developing effective and environmentally friendly flame retardant coatings containing halogen-free fire retardants that would meet the FAR rate of heat release and have the aesthetics for the decorative parts has been challenging.

Intumescent systems are widely used in fire retardant coatings. When exposed to sufficiently high temperatures, these coatings undergo significant expansion forming a thermally insulating carbonaceous layer (char). In conventional intumescent coatings, the intumescent part of the fire resistant coating comprises three distinct components, namely a phosphoric acid catalyst, a carbonaceous charring agent, and a blowing agent.

However, intumescent systems are effective only at high film thicknesses (typically >200 microns). Also, they are primarily used in non-decorative applications, e.g. structural protection such as steel and aluminum structures, where the gloss, feel and appearance of the coating are not important. Further, intumescent coatings generated significant amounts of smoke. Since the coatings thickness for the interior cabins of aircrafts applications typically range from 50-100 microns due to weight constraints, it greatly limits the use of intumescent coatings.

It is desired to provide a coating composition which complies with the requirements of FAR 25.853, even when applied in film thicknesses of below 200 microns, preferably below 100 microns. It is further desired that the coating composition is non-intumescent and halogen-free. It is also desired that such coating composition can be formulated as a waterborne composition. Preferably the coating composition does not require a crosslinker (particularly, is isocyanate-free). It is further desired that the coating has good mechanical properties, stain resistance and aesthetics when applied in such relatively thin layers. It is also desired that the coating composition has a long storage stability.

Summary of the invention

In order to address the above-mentioned desires, the present invention provides, in a first aspect, a halogen-free, non-intumescent, fire retardant coating composition comprising:

(a) a (meth)acrylate polymer, wherein the glass transition temperature $T_g$ of the (meth)acrylate polymer is at least 45°C measured with MDSC at 5°C/min as described further in the description,
(b) a polyurethane, wherein the polyurethane is based on a polycarbonate polyol, and wherein the polyurethane is present in an amount of 15-70 wt.% of the total weight of the polymers employed as binders, and
(c) ammonium polyphosphate,

said coating composition being free from a charring agent and a blowing agent.

In another aspect, the present invention provides a method for coating a substrate comprising applying the coating composition according to the invention to an optionally primed substrate and subsequently curing the coating composition.

In a further aspect, the invention also provides a substrate coated according to the method of the invention.

Detailed description of the invention

The coating composition according to the present invention is a halogen-free, non-intumescent, fire retardant composition.

"Halogen-free" means that the composition is free of any halogen-containing compounds, i.e. fluorine-, chlorine-, bromine-, iodine-containing compounds. Examples of such compounds are chlorinated paraffins, chlorendic acid, decabromodiphenyl ethyer (decaBDE), decabromodiphenyl ethane, polymeric brominated compounds such as brominated polystyrenes, brominated carbonate oligomers (BCOs), brominated epoxy oligomers (BEOs), tetrabromophthalic anhydride, tetrabromobisphenol A (TBBPA) and hexabromocyclododecane (HBCD). The coating composition is preferably free of antimony compounds as well, such as antimony trioxide, antimony pentoxide and sodium antimonate. Therefore, the coating composition according to the invention does not produce any toxic fire emissions.

The coating composition is further a non-intumescent coating composition. Intumescent coatings form a thick, highly insulating foam on the surface of the substrate when exposed to heat or flame. This is achieved by the use of a charring agent (e.g. polyhydric alcohol such as (di)pentaerythritol) and a blowing agent (such as melamine or urea). The present coating composition therefore contains no charring agent and no blowing agent.

The coating composition according to the present invention is preferably waterborne, which means that the water is the main component of the solvent phase, in which the binder resins are solved or dispersed. "Solvent" is used here to include both water and organic solvents. "Main component" means that it is present in a higher amount than any other solvent. Preferably, water constitutes at least 30 wt.%, more preferably at least 50 wt.%, yet preferably at least 60 wt.%, most preferably at least 70 wt.% of all the solvents.

The coating composition can however also be formulated as solventborne, if desired, meaning that the main component of the solvent phase is an organic solvent or a mixture of organic solvents.

The coating composition comprises binder resins, a fire retardant and optionally other components, described below.

**Binder resins**

As the binder resins, the present coating composition contains a blend of at least one (meth)acrylate polymer and at least one polyurethane.

**(Meth)acrylate polymer**

The (meth)acrylate polymer can be a homopolymer or is preferably a copolymer. The copolymer can be prepared from a monomer mixture comprising (meth)acrylate monomers. Optionally, other than (meth)acrylate monomers may be used. When "(meth)acrylate monomer" is used throughout this description, this means a monomer with a methacrylate or acrylate functionality. The (meth)acrylate polymer is preferably provided in the form of an aqueous emulsion.

The (meth)acrylate polymer can be prepared by known methods of addition polymerization from a monomer mixture comprising (meth)acrylate monomers. Examples of (meth)acrylate monomers are (meth)acrylic acid and their aliphatic and cycloaliphatic esters, such as methyl (meth)acrylate, ethyl (meth)acrylate, n-propyl (meth)acrylate, isopropyl (meth)acrylate, butyl (meth)acrylate, isobutyl (meth)acrylate, n-pentyl (meth)acrylate, neopentyl (meth)acrylate, cyclohexyl (meth)acrylate, 2-hexyl (meth)acrylate, 2-ethylhexyl (meth)acrylate, stearyl (meth)acrylate, and lauryl (meth)acrylate and their mixtures. The (meth)acrylate monomers can further include hydroxyalkyl esters of the acrylic acid and/or methacrylic acid such as 2-hydroxyethyl (meth)acrylate, 2-hydroxypropyl (meth)acrylate, 3-hydroxypropyl (meth)acrylate, 3-hydroxybutyl (meth)acrylate, and 4-hydroxybutyl (meth)acrylate, (meth)acrylic acid, ethanediol di(meth)acrylate, 1,4-butanediol di(meth)acrylate, 1,6-hexanediol di(meth)acrylate, trimethylolpropane tri(meth)acrylate, pentaerythritol di(meth)acrylate, and allyl (meth)acrylate. Particular preferred (meth)acrylate monomers for preparing the polyurethane are selected from the group consisting of n-butyl (meth)acrylate, methyl (meth)acrylate, 2-hydroxypropyl (meth)acrylate, 3-hydroxypropyl (meth)acrylate, (meth)acrylic acid, and mixtures thereof.

The monomer mixture can also comprise other copolymerizable monomers, such as vinyl monomers, e.g. styrene and substituted styrene. In some embodiments, the (meth)acrylate polymer is a styrene-(meth)acrylate copolymer, which means that the copolymer contains at least (meth)acrylate and styrene comonomers. In some embodiments, however, it can be preferred that only (meth)acrylate monomers are used.

In order to initiate the copolymerization typically at least one initiator such as, for example, tert-butyl peroxy-2-ethylhexanoate, is used.

The resulting (meth)acrylate polymer has the glass transition temperature ($T_g$) at least 45°C, more preferably at least 50°C, yet more preferably in the range 55-90°C. The term "glass transition temperature" is a term well known in the art and generally defines the onset of long range molecular motion wherein the polymer preserves the outward appearance of a solid but becomes rubbery and then tacky with increasing temperature and undergoes plastic flow and elastic deformation.

Glass transition temperature $T_g$ is determined by modulated differential scanning calorimetry (MDSC) with TA Instruments Q2000, done in modulation option, with an amplitude of 1°C, a period of 40s and an underlying heating range of 5°C/min. Helium is used as purge gas at a flow of 50 ml/min. Standard two runs are performed (at once after each other in one method), the second run is used for Tg reporting.

Without wishing to be bound by theory, the relatively high $T_g$ of the (meth)acrylate polymer is believed by the inventors to contribute to better stain resistance of the resulting coating.

The (meth)acrylate polymer preferably has both the number-average $M_n$ and weight-average $M_w$ molecular weights of at least 100,000 g/mol, more preferably in the range 500,000 - 5,000,000 g/mol. The molecular weights can be determined by means of gel permeation chromatography (GPC) analysis with tetrahydrofuran (THF) (+ 0.1% acetic acid) as eluent (1 ml/min) on a styrene-divinylbenzene column combination. Calibration is carried out using polystyrene standards. The high molecular weight makes it possible to formulate the coating composition as 1K (one component) without the need for a crosslinker.

The (meth)acrylate polymer emulsion preferably has a solid content from 10 to 60 wt.%, more preferably from 20 to 50 wt.%. The solid content can for example be determined in accordance with DIN EN ISO 3251 with an initial mass of 1.0 g of sample, test duration of 60 minutes and with a temperature of 125°C.

The (meth)acrylate polymer can have some acid functionality (i.e. prepared from a monomer mixture containing at least one acid-functional monomer), in order to aid dispersability in water. Preferably it has an acid number of less than 20 mg KOH/g, more preferably less than 10 mg KOH/g, yet more preferably in the range 1-7 mg KOH/g. The acid number in the context of the present invention is measured by potentiometric titration, e.g. in accordance with DIN EN ISO 3682.

The (meth)acrylate polymer preferably has an OH number (hydroxyl number) less than 5 mg KOH/g resin. In some embodiments, the (meth)acrylate polymer has no OH functionality and has an OH number of substantially 0 mg KOH/g resin. The hydroxyl number can be measured by potentiometric titration using the TSI method, e.g. according to ASTM E1899-08.

Commercial (meth)acrylate emulsions include Setaqua® 6770, Setaqua® 6756, Setaqua® 6766 from Allnex, Bayhydrol® A2427 from Bayer, Ottopol® KX-99 from Gellner Industrial, LLC, Joncryl® 540, Joncryl® 1532, Joncryl® 1982 from BASF, Picassian® AC-122, Picassian® AC-126, Picassian® AC-169, Picassian® AC-176 from Stahl.

Particularly good results are achieved when a self-crosslinking (meth)acrylate emulsion is used. "Self-crosslinking" means in the present description provided as a "one pot" system where all reactive components are present and long-term storage stable. The complementary reactive functional groups can be present on the same polymer chain, or an external crosslinking agent can be used. The crosslinking reaction can be triggered by the evaporation of water upon drying, a change of pH, or by curing at elevated temperature, where the crosslinking reaction is faster, or reactive groups are de-blocked.

Self-crosslinking systems can be based on the reaction of azeridines with acid groups on the polymer backbone, the reaction of hydroxyl functionality on the backbone with post added isocyanates or melamines, the reaction of amines with epoxy functionality where either can be on the polymer backbone or external, the auto-oxidation of incorporated fatty acid groups, the self-condensation of alkoxysilane functionality, the self-condensation of n-methylolacrylamide, metal-ion coordination with backbone functional groups such as acetoacetoxy groups or acid groups, and the reaction of acetoacetoxy groups with amines or acetoacetoxy groups with unsaturated groups in a Michael reaction.

Self-crosslinking resins can be prepared from a monomer mixture containing a monomer with a (self-)crosslinking functionality. The monomer with a (self-)crosslinking functionality is preferably present in an amount of less than 5 wt.%, more preferably less 4 wt.%, more preferably than in the range 0.5-3 wt.%, based on the total monomer mixture weight.

The monomer with a crosslinking functionality is preferably diacetone acrylamide (DAAM) and the complementary crosslinking agent present in the (meth)acrylate emulsion is adipic dihydrazide (ADH). The reaction between these groups eliminates water, which contributes to good storage stability in water-based emulsions. The crosslinking agent is preferably present in an amount of 0.5-1.0 equivalents to the diacetone acrylamide ketone groups present in the (meth)acrylate polymer.

When a self-crosslinking (meth)acrylate polymer emulsion contains a crosslinking agent, the crosslinking agent is preferably present in an amount less than 5 wt.% based on the solid weight of the (meth)acrylate polymer. Preferably, the crosslinking agent is present in an amount less than 1 wt.% based on the total weight of the coating composition.

Commercial (meth)acrylate emulsions with self-crosslinking functionality are for example Setaqua® 6766, Setaqua® 6770, both from Allnex, Picassian® AC-122, Picassian® AC-169 from Stahl.

The (meth)acrylate polymer is preferably present in an amount 10-50 wt.%, more preferably 14-40 wt.% of the total weight of the coating composition. The (meth)acrylate polymer is preferably present in an amount 30-85 wt.%, more preferably 40-60 wt.% of the total weight of the polymers employed as binders.

## Polyurethane

The second binder resin used in the blend is polyurethane. Preferably, it is provided in the form of an aqueous polyurethane dispersion (PUD).

Polyurethanes are typically prepared from at least one polyisocyanate and at least one polyol.

The polyisocyanates, which can be used in the polyurethane synthesis, are known in this context to the skilled person, such as, for example, hexamethylene diisocyanate, octamethylene diisocyanate, decamethylene diisocyanate, dodecamethylene diisocyanate, tetradecamethylene diisocyanate, trimethylhexane diisocyanate, tetramethylhexane diisocyanate, isophorone diisocyanate, 2-isocyanatopropylcyclohexyl isocyanate, dicyclohexylmethane 2,4'-diisocyanate, dicyclohexylmethane 4,4'-diisocyanate, 1,4- or 1,3-bis(isocyanatomethyl)cyclohexane, 1,4- or 1,3- or 1,2-diisocyanatocyclohexane, 2,4- or 2,6-diisocyanato-1-methylcyclohexane, or mixtures of these polyisocyanates. Preference is given to the dimers and/or trimers of the stated polyisocyanates, which are known per se - more particularly, the uretdiones and ioscyanurates of the aforementioned polyisocyanates, especially of the aforementioned diisocyanates, that are known per se and are that are also available commercially.

Aliphatic isocyanates, such as isophorone diisocyanate (IPDI), and cycloaliphatic isocyanates, such as methylenedicyclohexyl diisocyanate (H12MDI), 1,3-cis bis(isocyanatomethyl)cyclohexane, 1,3-trans bis(isocyanatomethyl)cyclohexane, 1,4-cis bis(isocyanatomethyl)cyclohexane, 1,4-trans bis(isocyanatomethyl)cyclohexane and mixtures thereof are preferred.

The term "polyol" refers to any organic compound having two (2) or more hydroxyl (-OH) groups that are capable of reacting with an isocyanate group. Polyols useful for preparation of polyurethane dispersions are generally known to a person skilled in the art. Suitable polyols may include polyether polyols, polyester polyols, polycarbonate polyols, and polylactone polyols. In accordance with the invention, the polyurethane is based on a polycarbonate polyol.

Polycarbonate polyols are known to persons skilled in the art. They can for example be prepared by reacting phosgene or a carbonate monomer (usually dimethyl carbonate (DMC)) with a diol monomer or a mixture of diol monomers. Examples of suitable diols include glycols such as ethylene glycol, propylene glycol, butylene glycol, butane-1,4-diol, hexane-1,6-diol, neopentyl glycol, and other diols, such as 1,4-dimethylolcyclohexane or 2-butyl-2-ethyl-1,3-propanediol, 1,6-hexanediol, 1,5-pentanediol, 1,4-cyclohexane dimethanol, 1,3-propanediol and their mixtures.

In some embodiments, the polyurethane may have a $T_g$ less than 90°C, more preferably in the range 30-80°C, yet more preferably in the range 40-70°C.

The polyurethane preferably has a number-average molecular weight $M_n$ from 2,000 to 100,000 g/mol, more preferably from 5,000 to 50,000. The polyurethane preferably has a weight-average molecular weight $M_w$ from 5,000 to 100,000 g/mol, more preferably from 10,000 to 50,000 g/mol.

Preferably, the polyurethane contains some acid functionality, to aid the dispersability in water. In some embodiments, the polyurethane preferably has an acid number less than 10 mg, or even less than 5 mg KOH/g resin.

The polyurethane preferably has an OH number (hydroxyl number) less than 5 mg KOH/g resin. In some embodiments, the polyurethane has no OH functionality and has an OH number of substantially 0 mg KOH/g resin.

The polyurethane may optionally be prepared in the presence of a catalyst such as dibutyltin dilaurate. The preparation of the polyurethane can preferably take place in an organic solvent such as methyl ethyl ketone (MEK). The resulting polyurethane can optionally be neutralized with at least one neutralizing agent such as ammonia or amines, for example triethylene amine, and dispersed in water. The organic solvent can then be removed for example by distillation under reduced pressure. A dispersion obtained in this way may retain a fraction of the organic solvent, used when preparing the polyurethane, that is at most in a range from 0.2 to 1.5 wt.%, preferably of 0.2 to 1.0 wt% or of 0.2 to 0.6 wt%, based on the total weight of the dispersion.

The polyurethane dispersion preferably has a solid content from 5 to 60 wt.%, more preferably from 10 to 50 wt.%.

Suitable commercial polyurethane dispersions are for example Picassian® PU461, PU676, Relca PU 655, all from Stahl, Bayhydrol® UH 2557, Bayhydrol® UH 2593/1, both from Bayer, SILIKOPUR® 8081 from Evonik, Hauthane L-2897 from Hauthaway.

The polyurethane is present in an amount of 15-70 wt.%, preferably 20-50 wt.% of the total weight of the polymers employed as binders.

The weight ratio of the (meth)acrylate polymer to the polyurethane is preferably in the range 1:5 to 5:1, more preferably in the range from 1:1 to 4:1, based on the solid weight of the polymers.

In the embodiments wherein the coating composition of the invention is a waterborne composition, it is preferred that both the (meth)acrylate polymer and the polyurethane are either soluble or dispersible in water. This means that the polymers do not precipitate in an aqueous medium as insoluble agglomerates but form a solution or a fine dispersion. For this purpose, ionic groups such as carboxyl groups can be incorporated into the polymer chain by using corresponding monomers during the polymerization. Such carboxylic groups can further be neutralized for a more effective dispersion with neutralizing agents, preferably ammonia, amines and/or, in particular, amino alcohols. Examples of the neutralization agents include ammonia and amines, such as di- and triethylamine, dimethylaminoethanol, diisopropanolamine, morpholines and/or N-alkylmorpholines.

## Fire retardants

In the present invention, ammonium polyphosphate (APP) is used as the main fire retardant. Ammonium polyphosphate is an inorganic salt of polyphosphoric acid and ammonia with the chemical formula $[NH_4 PO_3]_n(OH)_2$, wherein n is an integer higher than 1, preferably in the range 2-500.

Typically, APP is used in intumescent coating compositions, together with a charring agent and a blowing agent. In the present invention, however, no charring agent and no blowing agent are present and APP is used in a non-intumescent coating composition. It was surprising that APP used without a charring and a blowing agent, in combination with the specific, above-described binder blend leads to a coating composition with excellent fire retardant characteristics, long shelf-life and other benefits described in this specification and illustrated in the examples.

In some embodiments, it can be preferred to use APP in an encapsulated form. APP tends to hydrolyze in a moist environment, which can be prevented by encapsulation in a polymer layer. Examples of suitable polymers for encapsulation of APP include polyethylene, polypropylene, polybutylene, polystyrene, polyvinyl chloride, polyisobutylene, polyacrylonitrile, polyurethane, polymethyl methacrylate, polymethyl acrylate, polyvinyl acetate, polyethylene terephthalate (PET), polybutylene terephthalate, alkyd resin, polycarbonate, urea-formaldehyde resin, melamine-formaldehyde resin, melamine-urea-formaldehyde resin, phenolic resin, epoxy resin, polyoxymethylene (POM), polyethylene oxide, polyphenylene sulfide, hexamethylene adipamide polymer, polycaprolactam, polyimide, polydimethyl siloxane, acrylonitrile-butadiene-styrene(ABS) copolymer, styrene-butadienestyrene block copolymer (SBS), isobutylene-isoprene rubber (IIR), and butadiene-isoprene copolymer (PIB), and mixtures thereof.

In a preferred embodiment, APP is encapsulated in a melamine-formaldehyde layer. Such product is commercially available as Exolit® AP 462 from Clariant.

Although encapsulation leads to better performance, it is not absolutely necessary. The use of non-encapsulated APP is suitable as well. When needed, the non-encapsulated APP can be provided as a second component of a 2K composition, which is mixed shortly before application with the binder component. Examples of suitable non-encapsulated APP are Exolit® AP 422 and Exolit® AP 423 from Clariant. The APP is preferably present in an amount from 2 to 25 wt.%, more preferably from 3 to 15 wt.%, based on the total weight of the coating composition.

APP is a crystalline compound which exists in various polymorphous forms. There are two main polymorphs of APP: crystal phase I and crystal phase II. Ammonium polyphosphate in crystal phase I (APP-I) is characterized by a variable linear chain length with "n" values less than 100, possesses a low decomposition temperature (approximately 200°C) and a high water solubility (up to 20 %). The molecular weight of ammonium polyphosphate in crystal phase II (APP-II) is much higher, with "n" values of much more than 100. APP-II has a higher thermal stability (decomposition starts at approximately 280°C) and a lower water solubility than APP-I (4-5% vs. 20%). Preferably, the crystal phase II (APP-II) is used in the present invention.

In addition to APP, other fire retardants can also be used, such as aluminum trihydrate (ATH), magnesium hydroxide, a silicone based flame retardants such as silicone resin powder. The coating composition is further preferably free from red phosphorus.

Aluminum trihydrate (ATH) and magnesium hydroxide are known as fire retardants of low toxicity. They do not generate excessive amounts of smoke nor corrosive gasses in fires. They can further improve the fire retardant properties of the coating.

Preferably, the coating composition contains ATH in an amount of less than 50 wt.%, more preferably less than 40 wt.%, yet more preferably in the range 0.5-30 wt.%, or in the range 5-20 wt.%, based on the total weight of the coating composition.

Silicone containing flame retardants are considered environmentally friendly additives. Silicon-oxygen based polymers have high thermal stability and low noncorrosive smoke generation. Although, they are reported to have flame retardant properties, they are ineffective in meeting the FAR specifications, when used alone.

In some embodiments, the coating composition further comprises a silicone resin powder, particularly a polyorganosilsesquioxane.

Polyorganosilsesquioxane is an organosilicon compound with the chemical formula $[RSiO_{3/2}]_n$ where R = H, alkyl, aryl or alkoxyl. Silsesquioxanes are colorless solids that adopt cage-like or polymeric structures with Si-O-Si linkages and tetrahedral Si vertices. Silsesquioxanes are members of polyoctahedral silsesquioxanes ("POSS"). Diverse substituents (R) can be attached to the Si centers. The molecules feature an inorganic silicate core and an organic exterior.

Substituent R can be a substituted or unsubstituted monovalent hydrocarbon group. Examples of the group R include an alkyl group such as methyl, ethyl, propyl, butyl, pentyl, hexyl, heptyl, octyl, nonyl, decyl or dodecyl; a cycloalkyl group such as cyclopentyl or cyclohexyl; an aralkyl group such as 2-phenylethyl or 2-phenylpropyl; an aryl group such as phenyl or tolyl; an alkenyl group such as vinyl or allyl; and a substituted hydrocarbon group such as γ-glycidoxypropyl or 3,4-epoxycyclohexylethyl. Of those, methyl and phenyl are preferred, since such polyorganosilsesquioxanes can be easily synthesized and the final fine powder of such a polymer is excellent in heat resistance. More preferably, substituent R is methyl.

The use of polyorganosilsesquioxanes in the present invention is beneficial because they do not adversely affect the gloss or the mechanical properties of the coating, offer a "soft" feel, and are further well dispersible in water without hydrolyzing and have a long shelf life. Another benefit is that it increases the inorganic content, therefore, reducing the "burnable" fuel, improving the peak heat release properties.

Polyorganosilsesquioxanes are commercially available, inter alia from Sunjin Chemicals, Kobo, Ikeda, Asahi Glass, Miyoshi, Omega Materials, 3M, ABC NanoTech, Shin Etsu, China New Technology, PQ Corporation, Sibelco or Evonik. In some embodiments, the preferred silicone resin powder is a polyorganosilsesquioxane spherical silicone resin powder available in the E+ line available from ABC Nanotech and Shin Etsu. More preferably polymethylsilsesquioxane is used, e.g. commercially available as X-52-854 from Shin Etsu or ABC Nanotech, E+ grades.

The silicone resin powder is preferably present in an amount from 1 to 20 wt.%, preferably, from 4 to 15 wt.% based on the total weight of the coating composition.

**Pigments**

The coating composition preferably contains at least one pigment to impart color to the coating composition. Suitable pigments can be inorganic or organic. Examples of suitable inorganic coloring pigments are white pigments such as titanium dioxide, zinc white, zinc sulfide, or lithopone; black pigments such as carbon black, iron manganese black or spinel black; chromatic pigments such as chromium oxide, chromium oxide hydrate green, cobalt green, or ultramarine green, cobalt blue, ultramarine blue, or manganese blue, ultramarine violet or cobalt violet and manganese violet, red iron oxide, cadmium sulfoselenide, molybdate red or ultramarine red; brown iron oxide, mixed brown, spinel phases, and corundum phases, or chromium orange; or yellow iron oxide, nickel titanium yellow, chromium titanium yellow, cadmium sulfide, cadmium zinc sulfide, chromium yellow, or bismuth vanadate.

Examples of suitable organic coloring pigments are monoazo pigments, disazo pigments, anthraquinone pigments, benzimidazole pigments, quinacridone pigments, quinophthalone pigments, diketopyrrolopyrrole pigments, dioxazine pigments, indanthrone pigments, isoindoline pigments, isoindolinone pigments, azomethine pigments, thioindigo pigments, metal complex pigments, perinone pigments, perylene pigments, phthalocyanine pigments, or aniline black.

Effect pigments, furthermore, may be used as optional pigments present in the coating composition of the present invention. The coating composition therefore can contain at least one effect pigment. Effect pigments impart optical effect or color and optical effect to the coating. A corresponding division of the pigments may be made in accordance with DIN 55944. The effect pigments are preferably selected from the group consisting of organic and inorganic effect pigments. Suitable effect pigments are for example metal pigments such as aluminum effect pigments, iron effect pigments, or copper effect pigments, or nonmetallic effect pigments. Especially preferred are coated - such as silicate-coated, for example - aluminum effect pigments. These are commercially available from Eckart as Stapa® Hydrolac, Stapa® Hydroxal, Stapa® Hydrolux and Stapa® Hydrolan. The effect pigments may be present in any form known to the skilled person, such as a leaflet form and/or a platelet form.

The nonmetallic effect pigments are more particularly pearlescent pigments, especially mica pigments; platelet-shaped graphite pigments coated with metal oxides; interference pigments which comprise no metal reflector layer and have a strong color flop; platelet-shaped effect pigments based on iron oxide, having a shade from pink to brownish red; or organic liquid-crystalline effect pigments.

The pigment content is preferably in the range from 1 to 50 wt.%, more preferably in the range from 5 to 45 wt.%, more preferably in the range 10-35 wt.%, based on the total weight of the coating composition.

**Other components**

The coating composition according to the present invention may contain at least one organic solvent, for example in an amount less than 50 wt.%, preferably less than 30 wt.%, more preferably less than 20 wt.% of the total solvent weight (including water). Based on the total weight of the coating composition, the organic solvent content is preferably less than 30 wt.%, more preferably less than 20 wt.%, yet more preferably less than 15 wt.%. In some embodiments, the organic solvent content can be at least 0.5 wt.%, more preferably at least 1 wt.%, yet more preferably at least 5 wt.%, based on the total weight of the coating composition. In other embodiments the solvent content can be at least 15 wt.%, or at least 20 wt.%, or at least 30 wt.% based on the total weight of the coating composition.

Suitable organic solvents are preferably those, which can be mixed with water. Particularly preferred class is glycol ethers. These include ethylene glycol monomethyl ether, ethylene glycol monoethyl ether, ethylene glycol monopropyl ether, ethylene glycol monoisopropyl ether, ethylene glycol monobutyl ether, ethylene glycol monophenyl ether, ethylene glycol monobenzyl ether, propylene glycol methyl ether, diethylene glycol monomethyl ether, diethylene glycol monoethyl ether, diethylene glycol mono-n-butyl ether, dipropyleneglycol methyl ether. Preferred solvents include propylene glycol n-propyl ether, propylene glycol n-butyl ether, dipropylene glycol n-butyl ether, di(propylene glycol) methyl ether, ethylene glycol monobutyl ether.

Preferably, the coating composition is free of fillers. Examples of fillers are chalk, calcium sulfate, barium sulfate, silicates such as talc or kaolin, silica, oxides and hydroxides such as aluminum (hydr)oxide or magnesium (hydr)oxide, clays, nano silica, borates, glass beads, or organic fillers such as textile fibers, cellulose fibers, polyethylene fibers, or polymer powders. While fillers are commonly used in fire retardant coating compositions, they are not always suitable for all types of fire retardants. Coating compositions with APP, such as the coating composition of the present invention, may be more critical to the type of the filler used and in some cases can be destabilized by the use of certain fillers, for example synthetic clays, as described below. Typically fillers are used to increase the inorganic content of a fire retardant coating composition, which improves fire retardant properties. However in the present invention, the coating composition achieves excellent fire retardant properties without a high inorganic content. Preferably, the inorganic content of the composition according to the present invention is below 50 wt.%, more preferably below 45 wt.%, yet more preferably in the range 1-40 wt.%. Inorganic content is the content of all solid inorganic components (including pigments and inorganic fire retardants), drawn to the total weight of the coating composition.

The coating composition can further comprise conventional additives, such as defoamers, rheology modifiers, pigments, pH stabilizer, flow agents, levelling agents, wetting agents, matting agents, antioxidants, emulsifiers, stabilizing agents, inhibitors, catalysts, thickeners, thixotropic agents, impact modifiers, expandants, process aids, and mixtures of the aforementioned additives. The amounts of such additives is preferably from 0.01 to 25 wt.%, more preferably 0.05 to 15 wt.%, most preferably 0.1 to 10 wt.%, based on the total weight of the coating composition.

In some embodiments, the coating composition contains microfibrillated cellulose (MFC) as a rheology modifier. Microfibrillated cellulose in this context means cellulose microfibrils or a cellulose microfibril bundle isolated from cellulose-based raw materials. Cellulose-based raw material may be botanical raw material (e.g. hard wood and soft wood), or may be isolated from certain cellulose-producing microorganisms. The aspect ratio of microfibrils is typically very high; the length of microfibrils may be more than 1 micron and the number-average diameter is typically less than 200 nm. The dimensions and fiber structures of microfibrils or microfibril bundles depend on the raw material and the fragmentation method. Microfibrillated cellulose may also contain hemicellulose, the amount of which depends on the raw material used.

The use of microfibrillated cellulose is beneficial because of its very high surface area. It is considerably higher than the surface area of many traditional cellulose materials, like cellulose fibers used in paper making or microcrystalline cellulose. Preferably microfibrillated cellulose is used with low hemicellulose or lignin content, commercially available as Exilva Forte 10 from Borregard.

MFC is preferably present in an amount 0.1 - 20 wt.%, more preferably from 0.5 to 10 wt.% based on the total weight of the coating composition.

The use of MFC can further contribute to a better stability of the coating composition. Stability means that the coating composition after preparation undergoes no phase separation. A coating composition is considered unstable when the dispersed phase is no longer homogeneously dispersed or distributed throughout the continuous phase, e.g. the coating composition undergoes creaming, sedimentation, flocculation, coalescence or even phase inversion.

The stability of the coating compositions was the best when microfibrillated cellulose was used, especially in compositions containing effect pigments. Also in compositions without pigments, prolonged stability with APP is seen with microfibrillated cellulose. Inorganic rheology modifiers like synthetic clays (including synthetic smectite and nano-smectite type clays, such as Laponite and montmorillonite, and Cloisites (layered magnesium aluminum silicates)) destabilized the topcoat system when APP was used.

In some embodiments, therefore, it can be preferred that the coating composition does not contain synthetic clays, particularly from the clays listed above, more particularly from synthetic smectite clays.

The solids content of the coating composition of the invention is preferably from 10 to 85 wt.%, more preferably 15 to 80 wt.%, very preferably from 20 to 75 wt.%, and more preferably 40 to 70 wt.%.

The coating composition according to the invention can be prepared by mixing and dispersing and/or dissolving the respective components of the coating composition described above. This can be done by using conventional means, e.g. high-speed stirrers, stirred tanks, agitator mills, dissolvers, compounders, or inline dissolvers.

The coating composition is preferably formulated as a 1K coating composition. This means that all of the coating composition components are maintained and stored in the same container after manufacture and have a reasonable shelf life in this state. The advantages of 1K compositions are for example no need for a crosslinker and ease of handling, while providing for excellent performance characteristics, typically only achieved with 2K systems.

In a preferred embodiment, the coating composition is substantially crosslinker-free, particularly, substantially isocyanate- and carbodiimide-free. "Crosslinker" is a term known to the skilled person and means a component having groups capable of reaction with the functional groups (typically, hydroxyl and/or carboxyl groups) in the at least one binder resin. "Substantially crosslinker-free" means that the coating composition does not comprise such a compound or contains less than 5 wt.% thereof, preferably less than 1 wt.%, based on the total weight of the coating composition. "Substantially isocyanate- and carbodiimide-free" means that the coating composition does not comprise compounds with a reactive isocyanate or carbodiimide functionality, or contains less than 5 wt.% of those, preferably less than 1 wt.%, based on the total weight of the coating composition.

An important advantage of the present coating composition is that can be applied in thin layers (<200 micron), while having high performance as regulated in the standard test FAR 25.853.

The coating composition according to the invention can be used as a single coating applied directly to substrate, or in multilayer systems, particularly as a topcoat applied to a primer coat. The thickness of the coating obtained from the coating composition according to the invention is preferably less than 200 micron, more preferably in the range from 20 to 100 micron.

The fire retardant composition can further be formulated with any gloss grade, such as low or semi-gloss, and can be tinted in any color, with no effect on other performance properties such as fire retardant ability, heat retardant ability, water resistance.

The invention further provides a method to coat a substrate with the coating composition described above and a substrate coated with the coating composition. The method comprises applying and subsequently curing the coating composition according to the invention to an optionally primed substrate.

The coating composition can be applied to the substrates typically used for interior applications of airplanes or trains. The substrate is preferably selected from the group consisting of group consisting of plastic, composite, metal substrates. Particularly, the substrates can be plastics such as polycarbonates, polyetherimide (PEI), polyether ether ketone (PEEK), polyphenylsulfone (PPSU), composites such as honeycomb composites, laminates (e.g. PVF laminates), pre-treated metal (e.g. chromated aluminum). An example of a honeycomb composite is NOMEX® aramid paper from DuPont widely used in aircraft structural panels because of its high strength to weight ratio and resistance to fatigue failures.

The coating composition is particularly useful for aircraft interior applications.

The coating composition according to the invention can be applied to the substrate by any suitable means known in the art, e.g. spraying, brushing, rolling, or dipping.

The coating composition can preferably be cured at ambient conditions, such as room temperature (15-30°C). Preferably, the coating composition cures by physical drying i.e. by evaporation of water and optionally organic solvents present in the composition. If small amounts of a crosslinker are also present, the coating composition can also additionally cure by thermal curing. A skilled person is able to find suitable conditions such as temperature and curing times, to cure the coating composition of the invention. Typical curing conditions would be leaving the coating to dry at room temperature for example for 1 week.

Advantages of the coating composition according to the present invention include, among others, the possibility to formulate it as a 1K waterborne system, with required pigments for decorative purposes, which result in a coating that meets the flammability, smoke density, heat release and semi-gloss requirements, with good UV durability and non-yellowing properties. The coating obtained from the coating composition according to the invention further has good mechanical strength and chemical and stain resistance, long storage stability (e.g. several months) with the use of non-halogen containing fire retardants. The coating further passes the burn requirements set forth in FAR 25.853.

The coatings obtained from the coating compositions according to the present invention exhibit excellent stain resistance to various products, including mustard, coffee, lipstick, bovine blood, whiskey, juices, butter, hair oils, mayonnaise, chocolate syrup, wine and other house hold materials. These coatings are further resistant to chemicals like Bon Ami, Windex, isopropyl alcohol, acids and bases. The coatings can also withstand water immersion and humidity exposure without blistering or loss of adhesion, have excellent abrasion resistance and scratch resistance. The coatings are non-yellowing without the use of UV light stabilizers or UV absorbers.

The coating composition contains only halogen-free fire retardants for environmental safety and toxicity reduction. While it contains a phosphorus based fire retardant (APP), it provides performance comparable to halogen-based fire retardant compositions in terms of OSU (Ohio State University) heat release.

FAR 25.853 regulation includes the heat release from radiant heat using Ohio State University (OSU) rating, where the amount of energy released after 2 minutes and the peak heat release energy are measured. For many aerospace and transportation applications, materials are required to have a rating of peak heat release of 65 $kW/m^2$ and total heat release of 65 $kW\text{-}min/m^2$ after 2 minutes or less to be compliant with the standard. In several applications, a rating of peak heat release of 55 $kW/m^2$ and total heat release of 55 $kW\text{-}min/m^2$ after 2 minutes or less is required.

In general, it is highly desirable to have a material demonstrate a resistance to burn and achieve low OSU ratings. In addition, the time it takes to obtain peak heat release is another material characteristic that has significance since it correlates to the time people, such as passengers, crew, and others, have to flee the hazardous conditions. The coatings obtained from the coating compositions according to the present invention show peak heat release of at most 55 $kW/m^2$, which is comparable to halogen-containing fire retardants at comparable film weight thickness.

The coating composition of the present invention has a low VOC (volatile organic content), particularly less than 250 g/l. This allows for painting inside aircraft cabins with minimal protective equipment and can be applied with spray or brushed or rolled on. The coating composition has excellent UV durability without the use of UV absorbers and hindered amine stabilizers.

Examples

Raw materials used

Setaqua 6766, self-crosslinking styrene-acrylic emulsion from Allnex (40 wt.% solids, crosslinking agent adipic dihydrazide (ADH), MFFT 50°C, $T_g$ 65°C, $M_n$ and $M_w$ estimated higher than 1,000,000 g/mol, acid number 4.4 mg KOH/g resin)

Picassian PU 461, a polycarbonate diol based polyurethane dispersion from Stahl (35 wt.% solids, 14 wt.% solvents, $T_g$ 65°C, $M_n$ 7380 g/mol, $M_w$ 37700 g/mol)

AP462, ammonium polyphosphate (APP) encapsulated in melamine-formaldehyde, from Clariant

Higilite H-42M, aluminum trihydrate (ATH), available from Showa Denko

Tiona 596, titanium dioxide ($TiO_2$), available from Cristal

Byk 024, a defoamer available from Byk Chemie

Ammonia solution (25% solution in water), available from Nexeo

Exilva Forte (10% paste in water), microfibrillated cellulose, available from Borregaard

Dowanol PnP, propylene glycol n-propyl ether, available from Dow Chemical Company

Dowanol DPnB, dipropylene glycol n-butyl ether, available from Dow Chemical Company

Tamol 1124, a wetting and dispersing agent, available from Dow Chemical Company Byk 190, a wetting and dispersing agent, available from Byk Chemie

E+308, silicone resin powder (polymethylsilsesquioxane), available from ABC Nanotech

Laponite SL 25, synthetic layered silicate, rheology modifier, available from Byk Chemie

Example 1

Preparation of coating compositions

White coating compositions are prepared according to Table 1. The ingredients are mixed in a disperser to obtain a homogeneous composition. The amounts are given as parts by weight.

Table 1

| | | Topcoat 1 no FR | Topcoat 2 | Topcoat 3 | Topcoat 4 |
|---|---|---|---|---|---|
| Setaqua 6766 | acrylic emulsion | 23.42 | 18.99 | 23.46 | 23.46 |
| Picassian PU 461 | polyurethane dispersion | 11.47 | 9.30 | 11.49 | 11.49 |
| AP462 | ammonium polyphosphate | - | 1.66 | 5.00 | 5.00 |
| Higilite H-42M | aluminum trihydrate | - | - | - | 5.77 |
| Tiona 596 | $TiO_2$ | 11.55 | 11.55 | 11.55 | 5.77 |
| Dowanol PnP | solvent | 1.97 | 1.60 | 1.97 | 1.97 |
| Dowanol DPnB | solvent | 1.31 | 1.07 | 1.32 | 1.32 |
| Ammonia, 25 wt.% solution | neutralizing agent | 0.07 | 0.17 | 0.24 | 0.24 |
| Byk 024 | defoamer | 0.07 | 0.06 | 0.07 | 0.07 |
| Exilva Forte | microfibrillated cellulose | - | 1.17 | 1.75 | 1.75 |

(continued)

|  |  | Topcoat 1 no FR | Topcoat 2 | Topcoat 3 | Topcoat 4 |
|---|---|---|---|---|---|
| Tamol 1124 | pigment dispersant | 0.09 | 0.11 | 0.16 | 0.07 |
| Total weight |  | 49.95 | 45.68 | 57.01 | 56.98 |
| Inorganic content, wt. % |  | 23 | 29 | 29 | 29 |

Topcoat 1 contains no fire retardant (FR) and is a comparative composition. Topcoat 2 contains APP as the fire retardant and is formulated as a semi-gloss coating composition. Topcoat 3 contains APP as the fire retardant and is formulated as a low gloss coating composition. Topcoat 4 contains APP and ATH as the fire retardants. All prepared coating compositions were stable for over 1 year.

The prepared coating compositions were sprayed over a phenolic glass with Nomex honeycomb core composite substrate (BMS 8-226 obtained from Danner Corp). The compositions were sprayed using an HVLP gun with 1.6-1.8 mm tip. The compositions were allowed to cure at ambient conditions (23°C and about 50% relative humidity) for 1 week.

Example 2

The coatings prepared in Example 1 were tested by Govmark Corp (Framingdate, NY) for the rate of heat release using the OSU equipment according to the FAR 25.853 requirements. Heat release rate (HRR) of large area materials is measured using a fire calorimeter originally developed at Ohio State University (OSU). In the standard FAR 25 procedure, a sample is inserted into the combustion chamber of the OSU apparatus and subjected to a calibrated radiant heat flux of 35 $kW/m^2$ and an impinging pilot flame. Room temperature air is forced through the combustion chamber and exits through the exhaust duct at the top of the apparatus where a thermopile senses the temperature of the exhaust gases. Heat release rate (HRR) during the test is deduced from the sensible enthalpy rise of the air flowing through the combustion chamber using the temperature difference between the exhaust gases and the ambient incoming air to calculate the amount of heat released by burning after suitable calibration using a metered methane diffusion flame. Limits of 65 $kW/m^2$ and 65 $kW/m^2$-min for the peak heat release rate and the 2-minute total heat release rate, respectively, are placed on large area materials used in passenger cabins of transport category airplanes carrying more than 19 passengers.

The results are shown in Table 2.

|  | Film weight, g | Peak HRR, $kW/m^2$ | Total HRR, $kW\text{-}min/m^2$ | Pass/Fail* |
|---|---|---|---|---|
| Topcoat 1 - no FR | 2.41 | 72.06 | 60.72 | Fail |
| Topcoat 2 | 2.45 | 57.55 | 44.41 | Pass |
| Topcoat 3 | 2.32 | 50 | 45.81 | Pass |
| Topcoat 4 | 2.56 | 50.02 | 50.08 | Pass |
| * Pass/Fail refers to the requirement of both Peak HRR < 65 $kW/m^2$ and Total HRR < 65 $kW\text{-}min/m^2$ | | | | |

Example 3

The coatings prepared in Example 1 were tested for gloss, chemical resistance and abrasion resistance. Table 3 shows the results of the measurements.

Gloss at 60° angle is determined using a tri-gloss Byk Gardner gloss meter. Low gloss is defined as having 60° gloss in the range 8-12, semi gloss - in the range 12-30.

Solvent resistance is measured as methylethylketone double rubs (MEK DR) according to ASTM D4752.

Abrasion resistance was tested by measuring the Taber Wear index, calculated as the loss in weight of material per thousand cycles of abrasion. The lower the index, the better is the abrasion resistance. Taber Wear index was measured using CS10 wheel, 500 g load in accordance to ASTM D4060-14. The system was subjected to 350 cycles, resurfaced the wheel, then run addition 350 cycles. The wear index was calculated by:

$$WI = (A-B)*1000/C,$$

where A is the weight of specimen after initial 350 cycles in g, B is the weight of specimen after final 350 cycles in g, and C is 350 cycles.

Table 3

| | 60° gloss | MEK DR | Taber Wear index |
|---|---|---|---|
| Topcoat 1 - no FR | 72 | 77 | 69 |
| Topcoat 2 | 21.3 | >200 | 44 |
| Topcoat 3 | 10.3 | >200 | 45.33 |
| Topcoat 4 | 9.2 | >200 | 55.33 |

Example 4

The stain resistance of the coatings prepared in Example 1 was tested against several household stains, such as mustard, coffee, lipstick and wine. The stains were applied and left on the coating for 2 h and then cleaned with water/Turco 5948-DPM at 20:1 mixture by weight. The staining was rated on a scale of 0 - 5, with 0 rating indicating no staining and 5 indicating severe staining. Results are shown in Table 4.

Table 4

| | mustard | coffee with cream | donut coffee | lipstick | wine |
|---|---|---|---|---|---|
| Topcoat 1 - no FR | <0.5 | <0.5 | 0.5 | 0 | 0 |
| Topcoat 2 | 1 | 1 | 2 | 0 | 0 |
| Topcoat 3 | 0.5 | 1 | 1 | 0 | 0 |
| Topcoat 4 | 2 | 2 | 2 | 0 | 0 |

Example 5

Preparation of compositions

Coating compositions according Table 5 have been prepared - with and without silicone resin powder. Compositions 5 and 6 are semi-gloss compositions, compositions 7 and 8 are low gloss compositions. Compositions 5 and 7 contain silicone resin powder, while compositions 6 and 8 do not contain it.

Table 5

| | | #5 | #6 | #7 | #8 |
|---|---|---|---|---|---|
| Setaqua 6766 | acrylic emulsion | 36.26 | 41.34 | 32.17 | 38.62 |
| Picassian PU 461 | polyurethane dispersion | 17.75 | 20.25 | 15.8 | 19 |
| AP462 | ammonium polyphosphate | 2.7 | 3.64 | 5.54 | 6.65 |
| Higilite H-42M | aluminum trihydrate | - | - | - | - |
| Tiona 596 | $TiO_2$ | 25 | 25 | 19.9 | 23.9 |
| Dowanol PnP | solvent | 3.05 | 3.47 | 2.7 | 3.24 |
| Dowanol DPnB | solvent | 2.03 | 2.32 | 1.8 | 2.16 |
| Ammonia 25 wt.% solution | neutralizing agent | 0.29 | 0.38 | 0.29 | 0.34 |
| Byk 024 | defoamer | 0.12 | 0.13 | 0.1 | 0.12 |
| Exilva Forte | microfibrillated cellulose | 1.89 | 2.55 | 1.94 | 2.33 |
| Tamol 1124 | pigment dispersant | 0.23 | 0.24 | 0.23 | 0.28 |
| Chroma Chem WAB | pigments* | 0.69 | 0.69 | 2.94 | 3.41 |

(continued)

| | | #5 | #6 | #7 | #8 |
|---|---|---|---|---|---|
| E+308 | silicone resin powder | 10 | - | 16.7 | - |
| Total weight | | 100 | 100 | 100 | 100 |
| Inorganic content, wt. % | | 28 | 29 | 28 | 34 |
| * pigment mixture of Orange 36, Black 7 and Yellow 42 from Chroma Chem WAB | | | | | |

The prepared coating compositions were sprayed over a phenolic glass with Nomex honeycomb core composite substrate (Standard Core from Schneller). The compositions were sprayed using an HVLP gun with 1.6-1.8 mm tip. The compositions were allowed to cure at ambient conditions (23°C and about 50% relative humidity) for 1 week.

Example 6

The coatings prepared in Example 5 were tested by Govmark Corp (Framingdate, NY) for the rate of heat release using the OSU equipment. The results are shown in Table 6.

Table 6

| | Film weight, g | Peak HRR, kW/m$^2$ | Total HRR, kW-min/m$^2$ | Pass/Fail |
|---|---|---|---|---|
| Topcoat 5 | 1.95 | 54.56 | 47.38 | Pass |
| | 2.79 | 53.30 | 48.96 | Pass |
| | 3.59 | 63.13 | 48.06 | Pass |
| Topcoat 6 | 2.02 | 55.56 | 46.58 | Pass |
| | 2.89 | 69.10 | 51.62 | Fail |
| | 3.70 | 77.08 | 52.53 | Fail |
| Topcoat 7 | 2.35 | 55.01 | 51 | Pass |
| | 3.05 | 62.51 | 49.37 | Pass |
| Topcoat 8 | 2.05 | 56.81 | 46.28 | Pass |
| | 2.97 | 68.99 | 44.55 | Fail |
| | 3.98 | 80.62 | 43.73 | Fail |

Example 7

The coating compositions 7 and 8 as prepared in Example 5 were applied at different film builds over aluminum substrate (Aluminum 2024T3, bare, 0.040"). Since aluminum substrates heat up much faster than composite substrates, the peak heat release generated is often high and difficult to pass the customer specifications. The OSU burn equipment was used to measure the heat release. The test results are shown in Table 7.

Table 7

| | Film weight, g | Peak HRR, kW/m$^2$ | Total HRR, kW-min/m$^2$ | Pass/Fail* |
|---|---|---|---|---|
| Topcoat 7 | 2.35 | 13.12 | 4.29 | Pass |
| | 3.11 | 24.83 | 12.30 | Pass |
| Topcoat 8 | 2.02 | 20.58 | 8.17 | Pass |
| | 2.98 | 39.56 | 16.09 | Fail |
| | 3.96 | 47.70 | 19.66 | Fail |
| * Pass/Fail refers here to the requirement for Al substrates of both Peak HRR < 25 kW/m$^2$ and Total HRR < 25 kW-min/m$^2$. | | | | |

It is shown that the coatings passed the 25 peak / 25 total heat release requirement over the aluminum substrate, especially with the inclusion of the silicone resin powder, quite easily.

Example 8

Comparative commercial systems

The same Schneller substrate as described in Example 6 have been coated with comparative, commercially available fire retardant coatings. Alexit 346-57 is a 2K fire retardant coating composition available from Mankiewicz. MapAero FR2/55 is a 2K fire retardant coating composition available from MapAero. Both compositions contain an isocyanate hardener.

The results are shown in Table 8.

Table 8

| | Film weight, g | Peak HRR, kW/m$^2$ | Total HRR, kW-min/m$^2$ | Pass/Fail |
|---|---|---|---|---|
| Alexit 346-57 | 2.49 | 62.06 | 65.62 | Fail |
| MapAero FR2/55* | 2.28 | 51.75 | 48.95 | Pass |
| * contains halogenated fire retardant | | | | |

Topcoats 5 and 7 with the silicone resin powder showed comparable peak heat release as the competitive system, MapAero FR2/55, that contains halogenated fire retardant at similar topcoat weight. These topcoats will pass the FAR 25.853 heat release requirements at higher topcoat weights, allowing the customers time savings when repairing damages.

Example 9

Coatings with effect pigments

Coating compositions with and without mica as the effect pigment were prepared according to Table 9. The components were weighed in a stainless steel pot and mixed under agitation using an HSD mixer at 400 - 800 fpm for 20 min.

Table 9

| | Topcoat 9 - no FR | Topcoat 10 |
|---|---|---|
| Setaqua 6766 | 176.12 | 83.99 |
| Picassian PU 461 | 86.27 | 41.14 |
| Dowanol PnP | 42.70 | 21.03 |
| Dowanol DPnB | 28.29 | 13.93 |
| Ammonia, 25 wt.% solution | 1.77 | 0.74 |
| Byk 024 | 0.29 | 0.14 |
| Mica* | 10.52 | 5.26 |
| Exilva Forte 10 | 11.06 | 5.00 |
| Tamol 1124 | - | 0.11 |
| AP462 | - | 7.13 |
| DI water | 45.81 | 23.56 |
| Total | 402.81 | 202.01 |
| Inorganic content, wt. % | 3 | 6 |

(continued)

|  | Topcoat 9 - no FR | Topcoat 10 |
|---|---|---|
| Stability | stable | stable |
| *KC820-M1 Desert Orange mica and ferric oxide powder from Kuncai Americas | | |

Example 10

The coating compositions prepared in Example 9 were applied at different film builds over aluminum substrate (Aluminum T3, bare, 0.020"). Since aluminum substrates heat up much faster than composite substrates, the peak heat release generated is often high and difficult to pass the customer specifications. The OSU burn equipment was used to measure the heat release. The test results are shown in Table 11.

Table 11

|  | Film weight, g | Peak HRR, kW/m$^2$ | Pass/Fail* |
|---|---|---|---|
| Topcoat 9 - no FR | 0.23 | 5.08 | Pass |
|  | 0.69 | 13.52 | Pass |
| Topcoat 10 | 0.62 | 9.84 | Pass |
|  | 1.13 | 29.94 | Fail |
| * Pass/Fail refers here to the requirement for Al substrates of Peak HRR < 25 kW/m$^2$ | | | |

The results show that it is possible to formulate the coating composition according to the invention with effect pigments such as mica and that such compositions are stable and can achieve the required low peak heat release.

## Claims

1. A halogen-free, non-intumescent, fire retardant coating composition comprising:

   (a) a (meth)acrylate polymer, wherein the glass transition temperature $T_g$ of the (meth)acrylate polymer is at least 45°C, measured with MDSC at 5°C/min as described in the description,
   (b) a polyurethane, wherein the polyurethane is based on a polycarbonate polyol and wherein the polyurethane is present in an amount of 15-70 wt.% of the total weight of the polymers employed as binders, and
   (c) ammonium polyphosphate,

   said coating composition being free from a charring agent and a blowing agent.

2. The composition according to claim 1, being a waterborne coating composition.

3. The composition according to claim 1 or 2, wherein the (meth)acrylate polymer is present in the form of an aqueous emulsion, preferably a self-crosslinking emulsion.

4. The composition according to any one of claims 1-3, wherein the polyurethane is present in the form of an aqueous polyurethane dispersion.

5. The composition according to any one of claims 1-4, wherein the polyurethane has the weight-average molecular weight $M_w$ in the range from 5,000 to 100,000 g/mol.

6. The composition according to any one of claims 1-5, wherein the (meth)acrylate polymer has an acid value less than 20 mg KOH/g and a hydroxyl value less than 5 mg KOH/g.

7. The composition according to any one of claims 1-6, wherein the polyurethane has an acid value less than 10 mg KOH/g and a hydroxyl value less than 5 mg KOH/g.

8. The composition according to any one of claims 1-7, further comprising an organic solvent, preferably a glycol ether.

9. The composition according to any one of claims 1-8, further comprising microfibrillated cellulose (MFC).

10. The composition according to any one of claims 1-9, wherein ammonium polyphosphate is encapsulated in a melamine-formaldehyde layer.

11. The composition according to any one of claims 1-10, further comprising aluminum trihydrate (ATH).

12. The composition according to any one of claims 1-11, further comprising polyorganosilsesquioxane.

13. A method for coating a substrate comprising applying the coating composition according to any one of claims 1-12 to a substrate and subsequently curing the coating composition.

14. The method according to claim 13, wherein the substrate is selected from the group consisting of plastic, composite and metal substrates.

15. A substrate coated according to the method of any of claims 13-14.


**Patentansprüche**

1. Halogenfreie, nicht intumeszierende, flammwidrige Beschichtungszusammensetzung, umfassend:

   (a) ein (Meth)acrylat-Polymer, wobei die mit MDSC bei 5°C/min gemäß den Angaben in der Beschreibung gemessenen Glasübergangstemperatur $T_g$ des (Meth)acrylat-Polymers mindestens 45°C beträgt,
   (b) ein Polyurethan, wobei das Polyurethan auf einem Polycarbonatpolyol basiert ist und wobei das Polyurethan in einer Menge von 15-70 Gew.-% der Gesamtmenge der als Bindemittel eingesetzten Polymere vorliegt, und
   (c) Ammoniumpolyphosphat,

   wobei die Beschichtungszusammensetzung frei von einem Verkohlungsmittel oder einem Treibmittel ist.

2. Zusammensetzung nach Anspruch 1, bei der es sich um eine wässrige Beschichtungszusammensetzung handelt.

3. Zusammensetzung nach Anspruch 1 oder 2, wobei das (Meth)acrylatPolymer in Form einer wässrigen Emulsion, vorzugsweise einer selbstvernetzenden Emulsion, vorliegt.

4. Zusammensetzung nach einem der Ansprüche 1-3, wobei das Polyurethan in Form einer wässrigen Polyurethandispersion vorliegt.

5. Zusammensetzung nach einem der Ansprüche 1-4, wobei das Polyurethan ein gewichtsmittleres Molekulargewicht $M_w$ im Bereich von 5000 bis 100.000 g/mol aufweist.

6. Zusammensetzung nach einem der Ansprüche 1-5, wobei das (Meth)acrylat-Polymer eine Säurezahl von weniger als 20 mg KOH/g und eine Hydroxylzahl von weniger als 5 mg KOH/g aufweist.

7. Zusammensetzung nach einem der Ansprüche 1-6, wobei das Polyurethan eine Säurezahl von weniger als 10 mg KOH/g und eine Hydroxylzahl von weniger als 5 mg KOH/g aufweist.

8. Zusammensetzung nach einem der Ansprüche 1-7, ferner umfassend ein organisches Lösungsmittel, vorzugsweise einen Glykolether.

9. Zusammensetzung nach einem der Ansprüche 1-8, ferner umfassend mikrofibrillierte Cellulose (MFC).

10. Zusammensetzung nach einem der Ansprüche 1-9, wobei Ammoniumpolyphosphat in einer Melamin-Formaldehyd-Schicht eingekapselt ist.

11. Zusammensetzung nach einem der Ansprüche 1-10, ferner umfassend Aluminiumtrihydrat (ATH).

**12.** Zusammensetzung nach einem der Ansprüche 1-11, ferner umfassend Polyorganosilsesquioxan.

**13.** Verfahren zum Beschichten eines Substrats, bei dem man die Beschichtungszusammensetzung nach einem der Ansprüche 1-12 auf ein Substrat aufbringt und anschließend die Beschichtungszusammensetzung härtet.

**14.** Verfahren nach Anspruch 13, wobei das Substrat aus der Gruppe bestehend aus Kunststoff-, Verbund- und Metallsubstraten ausgewählt ist.

**15.** Substrat, beschichtet gemäß dem Verfahren nach einem der Ansprüche 13-14.

**Revendications**

**1.** Composition de revêtement ignifuge, non intumescente, sans halogène comprenant :

(a) un polymère de (méth)acrylate, la température de transition vitreuse $T_g$ du polymère de (méth)acrylate étant d'au moins 45 °C, mesurée par MDSC à 5 °C/min comme décrit dans la description,
(b) un polyuréthane, le polyuréthane étant basé sur un polycarbonate polyol et le polyuréthane étant présent en une quantité de 15 à 70 % en poids du poids total des polymères employés comme liants, et
(c) du polyphosphate d'ammonium,

ladite composition de revêtement étant exempte d'un agent de carbonisation et d'un agent de gonflement.

**2.** Composition selon la revendication 1, qui est une composition de revêtement à base d'eau.

**3.** Composition selon la revendication 1 ou 2, le polymère de (méth)acrylate étant présent sous la forme d'une émulsion aqueuse, préférablement d'une émulsion auto-réticulante.

**4.** Composition selon l'une quelconque des revendications 1 à 3, le polyuréthane étant présent sous la forme d'une dispersion aqueuse de polyuréthane.

**5.** Composition selon l'une quelconque des revendications 1 à 4, le polyuréthane possédant le poids moléculaire moyen en poids $M_w$ dans la plage de 5 000 à 100 000 g/mole.

**6.** Composition selon l'une quelconque des revendications 1 à 5, le polymère de (méth)acrylate possédant un indice d'acide inférieur à 20 mg de KOH/g et un indice d'hydroxyle inférieur à 5 mg de KOH/g.

**7.** Composition selon l'une quelconque des revendications 1 à 6, le polyuréthane possédant un indice d'acide inférieur à 10 mg de KOH/g et un indice d'hydroxyle inférieur à 5 mg de KOH/g.

**8.** Composition selon l'une quelconque des revendications 1 à 7, comprenant en outre un solvant organique, préférablement un éther de glycol.

**9.** Composition selon l'une quelconque des revendications 1 à 8, comprenant en outre une cellulose microfibrillée (MFC).

**10.** Composition selon l'une quelconque des revendications 1 à 9, le polyphosphate d'ammonium étant encapsulé dans une couche de mélamine-formaldéhyde.

**11.** Composition selon l'une quelconque des revendications 1 à 10, comprenant en outre du trihydrate d'aluminium (ATH).

**12.** Composition selon l'une quelconque des revendications 1 à 11, comprenant en outre un polyorganosilsesquioxane.

**13.** Procédé pour le revêtement d'un substrat comprenant une application de la composition de revêtement selon l'une quelconque des revendications 1 à 12 sur un substrat et subséquemment un durcissement de la composition de revêtement.

**14.** Procédé selon la revendication 13, le substrat étant choisi dans le groupe constitué par des substrats de matière plastique, composites et métalliques.

**15.** Substrat revêtu selon le procédé selon l'une quelconque des revendications 13 et 14.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 255